# EUROPÄISCHE PATENTANMELDUNG

(11) **EP 2 740 611 A1**
(43) Veröffentlichungstag der Anmeldung: **11.06.2014**
(21) Anmeldenummer: 13195728.4
(22) Anmeldetag: 04.12.2013
(51) Int. Cl.: B44C 5/04, B32B 38/18

(54) **Imprägnat, Laminat und Verfahren zur Herstellung eines Laminats**

(30) Priorität: 05.12.2012 DE 102012111848
(71) Anmelder: Interprint GmbH, 59759 Arnsberg (DE); Wemhöner Surface Technologies GmbH & Co. KG, 32052 Herford (DE)
(72) Erfinder: David, Robert, 59494 Soest (DE); Suur-Nuuja, Kimmo, 59755 Arnsberg (DE); Witte, Frank, 59823 Arnsberg (DE); Dammermann, Uwe, 32479 Hille (DE); Hageböke, Frank, 32339 Espelkamp (DE)
(74) Vertreter: Brune, Axel

(57) **Zusammenfassung**

Offenbart wird ein Imprägnat (1) mit einer Vorderseite (15) und einer Rückseite (16), wobei eine Dekorschicht (12) und mindestens eine Passmarke (13) auf der Vorderseite (15) angeordnet ist, wobei das Imprägnat (11) eine Opazität von weniger als 50%, vorzugsweise zwischen 5% und 40%, insbesondere 15% aufweist. Weiter offenbart wird ein Laminat, umfassend ein erstes Imprägnat (1), ein zweites Imprägnat (2), und eine zwischen den Imprägnaten (1, 2) angeordnete Grundplatte (3), wobei es sich bei dem ersten Imprägnat (1) um das oben beschriebene Imprägnat handelt. Ausserdem wird ein Verfahren zur Herstellung des Laminats mit einer Presse offenbart.

## Beschreibung

Die vorliegende Erfindung betrifft ein Imprägnat gemäß dem Oberbegriff des Anspruchs 1, ein Laminat gemäß dem Oberbegriff des Anspruchs 8 und ein Verfahren zur Herstellung eines Laminats gemäß dem Oberbegriff des Anspruchs 11.

Dekorpapiere sind Spezialpapiere zur Oberflächenveredelung von flächigen Werkstoffen, vorzugsweise plattenförmigen Holzwerkstoffen. Im Wesentlichen umfasst das Dekorpapier ein Dekorrohpapier mit einer aufgedruckten Schicht, sprich eine Dekorschicht. Die Dekorschicht bildet oft eine Holzoberfläche ab. Es sind aber auch andere Motive denkbar. Auch sind sogenannte unbedruckte Dekorpapiere bekannt, die im wesentlichen lediglich ein eingefärbtes Dekorrohpapier umfassen.

Die bedruckten oder unbedruckten Dekorpapiere werden zu sogenannten Imprägnaten weiterverarbeitet, indem sie mit Harz getränkt bzw. das Harz auf andere Art und Weise in oder auf das Dekorpapier ein- bzw. aufgebracht wird. Im Wesentlichen handelt es sich bei einem Imprägnat um ein harzgetränktes Dekorpapier. Das Harz kann das Dekorpapier vollständig oder auch nur teilweise durchdringen.

Ein Laminat umfasst im Wesentlichen eine Grundplatte und ein auf die Vorder- und/oder Rückseite der Grundplatte aufgebrachtes Imprägnat. Im Wesentlichen werden die Grundplatte und das bzw. die Imprägnate unter Druck und/oder Hitze miteinander verpresst und bilden anschließend ein Laminat aus.

Diese Laminate können beispielsweise in der Möbel- oder Fußbodenherstellung eingesetzt werden. Während bei der Verwendung der Laminate als Fußbodenpanel in der Regel nur eine Seite der Grundplatte mit einem bedruckten Imprägnat und die Rückseite mit einem unbedruckten Imprägnat, einem sogenannten Gegenzug, ausgestattet werden, sind Laminate für die Möbelindustrie in der Regel auf beiden Seiten mit einem bedruckten Imprägnat bzw. Dekorpapier ausgestattet.

Wie bereits angesprochen werden die Imprägnate und die Grundplatte miteinander verpresst. Dies geschieht in der Regel in einer Presse unter zu Hilfenahme von sogenannten Pressblechen. Das Pressblech kann dabei eine strukturierte Oberfläche, beispielsweise das Relief einer nicht ebenen Holzoberfläche als Negativdarstellung, aufweisen.

Grundsätzlich muss das Imprägnat für den Pressvorgang zu dem Pressblech ausgerichtet werden. Dies gilt insbesondere für die mit einer Druckschicht versehenen Imprägnate, da beispielsweise ein Holzdekor und sein dreidimensionales Relief zueinander ausgerichtet werden müssen, um eine maximal authentische Holzoberfläche in Farbe und Struktur imitieren zu können. Bei unbedruckten Imprägnaten ist diese exakte Ausrichtung nicht notwendig.

Die Ausrichtung von Imprägnat und Pressblech zueinander wird - neben weiteren benötigten Gerätschaften - vornehmlich durch sogenannte Passmarken gesteuert, die auf dem Imprägnat angebracht sind.

Passmarken sind im Bereich der Druckindustrie weit verbreitet. Sie dienen z.B. zum passgenauen Einstellen der Druckformen zueinander. In der Weiterverarbeitung von Dekorpapieren werden insbesondere zwei Passmarken verwendet. Einerseits geben sogenannte Cut-Markierungen ein Triggersignal zum Ansteuern eines Querschneidens von imprägnierten Papieren. Damit wird insbesondere die Länge eines Imprägnats gesteuert.

Im Bereich des passgenauen Verpressens von Imprägnaten zu Pressblechen, dem sogenannten Embossing in Register (EIR), werden Passmarken ausgelesen und die Imprägnate werden zu den eingesetzten Pressblechen ausgerichtet. Dies wird insbesondere für die Herstellung von Laminatfußboden eingesetzt.

Wie bereits oben angesprochen werden für den Bereich der Möbelherstellung auf beiden Seiten der Grundplatte dekorative Imprägnate aufgebracht, sprich mit einer Druckschicht versehene Imprägnate, beidseitig verwendet. Die Laminate für die Fußbodenherstellung sind nur einseitig dekorativ, für die Rückseite der Grundplatte werden zumeist funktionale, sprich unbedruckte Imprägnate, sogenannte Gegenzüge verwendet.

Wenn nun die EIR Technik für die Möbelherstellung eingesetzt wird und beidseitig dekorative Laminate hergestellt werden sollen, gibt es das Problem, dass die Imprägnate für die Unterseite der Grundplatte auf einem Band transportiert werden bzw. auf einem Pressblech liegen. Dieses Band bzw. Pressblech ist in der Regel nicht transparent. Ein Auslesen von Passmarken auf der Unterseite der herzustellenden Laminate ist somit nicht einfach möglich. Selbst wenn das Band oder die Pressbleche durchsichtig wären, möchte man auch nicht mit einer Kamera von der Unterseite her arbeiten, da sie sehr schnell verschmutzen würde.

Zum Ausrichten der Imprägnate können diese gegen einen Anschlag gefahren werden. Die Genauigkeit des Ausrichtens reicht jedoch nicht immer aus, da die Imprägnate am Anschlag dazu neigen zu verrutschen.

Hier setzt die vorliegende Erfindung an und macht es sich zur Aufgabe, ein verbessertes Imprägnat mit Dekorschicht und mindestens einer Passmarke auf der Vorderseite bereitzustellen, insbesondere ein Imprägnat mit Dekorschicht und mindestens einer Passmarke auf der Vorderseite bereitzustellen, deren Passmarken von der Rückseite aus erfasst werden können. Erfindungsgemäß wird diese Aufgabe durch ein Imprägnat mit den kennzeichnenden Merkmalen des Anspruchs 1 gelöst. Dadurch, dass das Imprägnat eine Opazität von weniger als 50%, vorzugsweise zwischen 5% und 40%, insbesondere 15% aufweist, kann eine auf der Vorderseite aufgedruckte Passmarke auch von der Rückseite des Imprägnats aus erfasst werden. Mit anderen Worten, die Passmarke scheint in ausreichendem Maße durch das Imprägnat hindurch. Durch diese Maßnahme wird es einer Erfassungseinrichtung, beispielsweise einer elektronischen Kamera, ermöglicht, die Passmarke auch von der Rückseite her zu erfassen, was wiederum die Ausrichtung des Imprägnats in einer Presse ermöglicht, welches mit seiner Vorderseite bzw. der aufgedruckten Passmarke der Erfassungseinrichtung abgewandt ist. Diese Möglichkeit ist insbesondere bei der Herstellung von beidseitig mit einem Dekor versehenen Laminat vorteilhaft, da das erste Imprägnat mit seiner Vorderseite auf einem nicht durchsichtigen, in der Regel aus Metall bestehenden Pressblech aufliegen kann.

Weitere vorteilhafte Ausgestaltungen der vorliegenden Erfindung ergeben sich insbesondere aus den Unteransprüchen. Die Merkmale der Unteransprüche können grundsätzlich beliebig miteinander kombiniert werden.

In einer vorteilhaften Ausgestaltung der Erfindung kann vorgesehen sein, dass die Dekorschicht und die mindestens eine Passmarke auf der Vorderseite angeordnet sind, wobei keine Dekorschicht oder Passmarke auf der Rückseite angeordnet sind, insbesondere die Rückseite unbedruckt ist. Eine derartige Ausgestaltung des Imprägnats eignet sich in besonders vorteilhafter Weise für die Herstellung eines beidseitig dekorativen Laminats, insbesondere da ein nur einseitig bedrucktes Imprägnat verwendet werden kann, welches preiswerter hergestellt werden kann, als beispielsweise ein Imprägnat, welches die benötigten Passmarken auf der Rückseite aufgebracht hat. Letzteres würde einen kompletten zweiten Druckvorgang des bereits einseitig mit einer Dekorschicht versehenen Dekorpapiers erfordern, da in Druckmaschinen in der Regel nur einseitig gedruckt werden kann.

In einer weiteren vorteilhaften Ausgestaltung der Erfindung kann vorgesehen sein, dass es sich bei der Dekorschicht um die Abbildung einer Holz-, Stein- oder sonstigen Oberfläche handelt, umfassend Farbe, die vorzugsweise mittels Tiefdruck-, Laserdruck- oder Tintenstrahlverfahren aufgebracht ist.

In einer weiteren vorteilhaften Ausgestaltung der Erfindung kann vorgesehen sein, dass die Passmarke als Kreis, Kreuz, Quadrat, Dreieck, etc. ausgestaltet ist. Grundsätzlich können die Passmarken beliebige geometrische Formen aufweisen, die von einer Auswerteeinrichtung hinsichtlich ihrer Lage erfasst werden können.

In einer weiteren vorteilhaften Ausgestaltung der Erfindung kann vorgesehen sein, dass die Vorderseite in einer Draufsicht einen ersten Randabschnitt und einen zweiten Randabschnitt aufweist, wobei die Dekorschicht zwischen den Randabschnitten angeordnet ist, wobei die mindestens eine Passmarke in dem ersten Randabschnitt oder dem zweiten Randabschnitt angeordnet ist, insbesondere mindestens je eine Passmarke in jedem Randabschnitt angeordnet ist, wobei die Randabschnitte eine Opazität von weniger als 50%, vorzugsweise zwischen 5% und 40%, insbesondere 15% aufweisen. Die vorgenannte Aufteilung bietet eine gute Möglichkeit, die zur Verfügung stehende Fläche des Dekorrohpapiers entsprechend den angedachten Funktionen auszunutzen. Während die Ränder, sprich die Randabschnitte, für die Passmarken genutzt werden und im Wesentlichen durchsichtig bleiben bzw. eine entsprechend niedrige Opazität aufweisen, ist ein mittlerer Streifen des Dekorrohpapiers bzw. Dekorpapiers und damit des Imprägnats mit einer Dekorschicht bedruckt. Dieser Bereich wird im Wesentlichen durch eine ausreichend opake Dekorschicht bedruckt, so dass in diesem Bereich keine Unterschieden zu einem herkömmlichen Imprägnat bzw. Laminat für den Endkunden erkennbar wären. Andererseits bleiben die Randabschnitte für die Passmarken vorbehalten. Die Randabschnitte werden bei dem fertigen Laminat ohnehin abgetrennt und das Imprägnat kann in diesem Abschnitt entsprechend durchsichtig bleiben, damit die Passmarken auch von der Rückseite aus ausgewertet werden können.

In einer weiteren vorteilhaften Ausgestaltung der Erfindung kann vorgesehen sein, dass das Harz ganz oder teilweise über den Querschnitt des Imprägnats verteilt ist. Das Harz soll nach dem Verpressen komplett vernetzen und so einen Verbund zwischen dem Dekorpapier und dem Grundkörper herstellen.

In einer weiteren vorteilhaften Ausgestaltung der Erfindung kann vorgesehen sein, dass es sich bei dem Harz um Melaminharz oder Aminoplastharz handelt. Melaminharze und Aminoplaste sind dazu geeignet den Verbund zwischen dem Dekorpapier und dem Grundkörper herzustellen. Sie vernetzen vollständig erst vorzugsweise während des Verpressens wegen der dann höheren Temperaturen und nicht bei der Trocknung nach der Imprägnierung. Bei der Trocknung findet aber schon eine Teilvernetzung statt.

Eine weitere Aufgabe der vorliegenden Erfindung liegt darin, ein verbessertes Laminat vorzuschlagen, insbesondere ein beidseitig dekoratives Laminat vorzuschlagen, welches kostengünstig herstellbar ist.

Erfindungsgemäß wird diese Aufgabe durch ein Laminat mit den kennzeichnenden Merkmalen des Anspruchs 8 gelöst. Dadurch, dass es sich bei dem ersten Imprägnat um ein Imprägnat gemäß mindestens einem der Ansprüche 1 bis 7 handelt, kann die Erfassung der Passmarken des ersten Imprägnats von dessen Rückseite aus erfolgen, so dass beispielsweise das gleiche Erfassungssystem, wie für das zweite Imprägnat genutzt werden kann. In beiden Fällen erfolgt die Erfassung der Passmarken von Oberhalb des Imprägnats, so dass beispielsweise nicht damit zu rechnen ist oder es zumindest unwahrscheinlich ist, dass die Erfassungseinrichtung durch schwerkraftbedingt herunterfallende Papier- oder Harzreste verschmutzt wird. Hierdurch sind weit weniger Unterbrechungen des Produktionsablaufes zu erwarten, so dass letztendlich Kosten eingespart werden können.

In einer vorteilhaften Ausgestaltung der Erfindung kann vorgesehen sein, dass es sich bei dem zweiten Imprägnat um ein Imprägnat gemäß mindestens einem der Ansprüche 1 bis 7 handelt oder das zweite Imprägnat ein Dekorpapier und Harz umfasst, wobei das Imprägnat des zweiten Imprägnats eine Vorderseite und eine Rückseite aufweist, wobei eine Dekorschicht und vorzugsweise mindestens eine Passmarke auf der Vorderseite aufgebracht ist und keine Dekorschicht oder Passmarke auf der Rückseite angeordnet sind, insbesondere die Rückseite unbedruckt ist. Das zweite Imprägnat auf der gegenüberliegenden Seite der Grundplatte kann entsprechend ein erfindungsgemäßes Imprägnat oder ein herkömmliches Imprägnat sein. Das zweite Imprägnat ist bei der Herstellung des Laminats ohnehin der Erfassungseinrichtung zugewandt, so dass es hier nicht zwangsläufig darauf ankommt, dass die Passmarke auch auf der Rückseite sichtbar ist. Letztendlich sollte das zweite Imprägnat aber ebenfalls, neben der Dekorschicht auf der Vorderseite, mindestens eine Passmarke auf seiner Vorderseite aufweisen, so dass auch die Lage des zweiten Imprägnats vorteilhaft durch die Erfassungseinrichtung erfasst werden kann.

In einer weiteren vorteilhaften Ausgestaltung der Erfindung kann vorgesehen sein, dass die Vorderseite des ersten Imprägnats und die Vorderseite des zweiten Imprägnats der Grundplatte abgewandt sind bzw. die Rückseite des ersten Imprägnats und die Rückseite des zweiten Imprägnats der Grundplatte zugewandt sind.

Eine weitere Aufgabe der vorliegenden Erfindung liegt darin, ein verbessertes Verfahren zur Herstellung eines Laminats gemäß dem Oberbegriff des Anspruchs 11 vorzuschlagen, insbesondere ein Verfahren zur Herstellung eines Laminats gemäß dem Oberbegriff des Anspruchs 11 vorzuschlagen, mit dem sich Laminat kostengünstiger herstellen lässt.

Erfindungsgemäß wird diese Aufgabe durch ein Verfahren gelöst, welches mindestens die Verfahrensschritte umfasst:
- Auflegen eines ersten Imprägnats gemäß mindestens einem der Ansprüche 1 bis 7 auf das untere Pressblech, wobei die mit der Dekorschicht und der mindestens einen Passmarke ausgestattete Vorderseite des ersten Imprägnats dem unteren Pressblech zugewandt bzw. der Erfassungseinrichtung abgewandt ist;
- Erfassen der durch das erste Imprägnat durchscheinenden mindestens einen Passmarke durch die Erfassungseinrichtung;
- Ausrichten des ersten Imprägnats zu dem unteren Pressblech mittels der Ausrichtungseinrichtung unter Verwendung der Daten der Erfassungseinrichtung;
- Auflegen einer Grundplatte auf das ausgerichtete erste Imprägnat;
- Auflegen eines zweiten Imprägnats auf die Grundplatte, wobei die mit der Dekorschicht und der mindestens einen Passmarke ausgestattete Vorderseite des zweiten Imprägnats dem oberen Pressblech bzw. der Erfassungseinrichtung zugewandt ist;
- Erfassen der mindestens einen Passmarke des zweiten Imprägnats durch die Erfassungseinrichtung;
- Ausrichten des zweiten Imprägnats zu dem oberen Pressblech mittels der Ausrichtungseinrichtung unter Verwendung der Daten der Erfassungseinrichtung;
- Niederfahren des Stempels und pressen des Laminats.

Im Rahmen des vorgeschlagenen Verfahrens wird die Passmarke des ersten Imprägnats von der Rückseite aus erkannt. Dies hat den Vorteil, dass keine weiteren technischen Maßnahmen ergriffen werden müssen, um die eigentlich auf der Vorderseite des Imprägnats aufgedruckte Passmarke von unterhalb des Pressentisches bzw. von unterhalb des unteren Pressblechs aus zu erfassen. Derartige Maßnahmen wären wesentlich aufwendiger, da beispielsweise mit zumindest einem teilweise durchsichtigen Pressentisch bzw. einem teilweise durchsichtigen unteren Pressblech gearbeitet werden müsste. Mit dem erfindungsgemäß vorgeschlagenen Verfahren kann demgegenüber eine herkömmliche Presse verwendet werden.

Vorzugsweise kann das Ausrichten des ersten Imprägnats zu dem unteren Pressblech und des zweiten Imprägnats zu dem oberen Pressblech wahlweise innerhalb oder außerhalb der Presse erfolgen und das Paket aus den beiden Imprägnaten, der Grundplatte und den beiden Pressblechen - im Falle der Ausrichtung außerhalb der Presse - als Ganzes in die Presse eingefahren werden. Auch hier wird das Problem des undurchsichtigen unteren Pressblechs und der Erfassung der Passmarken des hierauf liegenden ersten Imprägnats dadurch gelöst, dass die Passmarken durchschimmern und auf von der Rückseite des ersten Imprägnats her erfasst werden können.

Vorzugsweise können die Randbereich nach dem Verpressen abgetrennt werden.

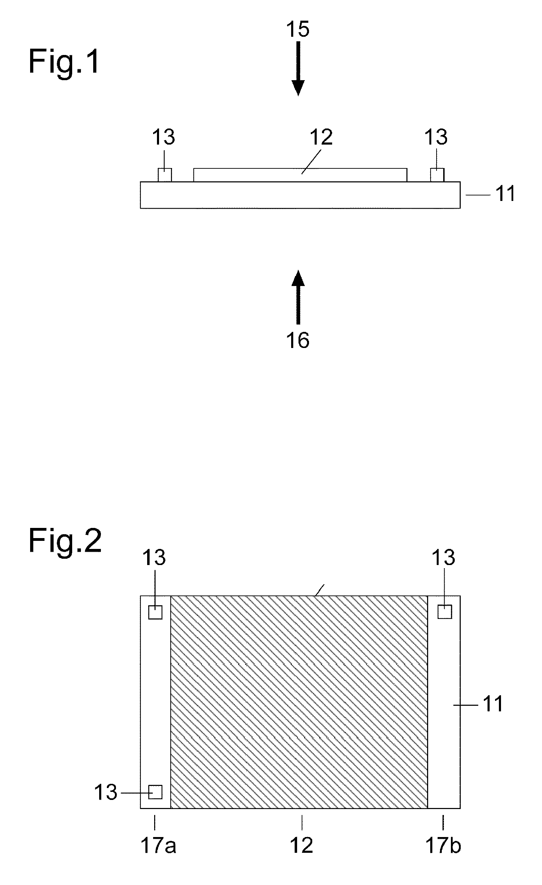

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: ein Dekorpapier in einer Querschnittsdarstellung;
- Fig. 2: ein Dekorpapier in einer Ansicht auf die Vorderseite;

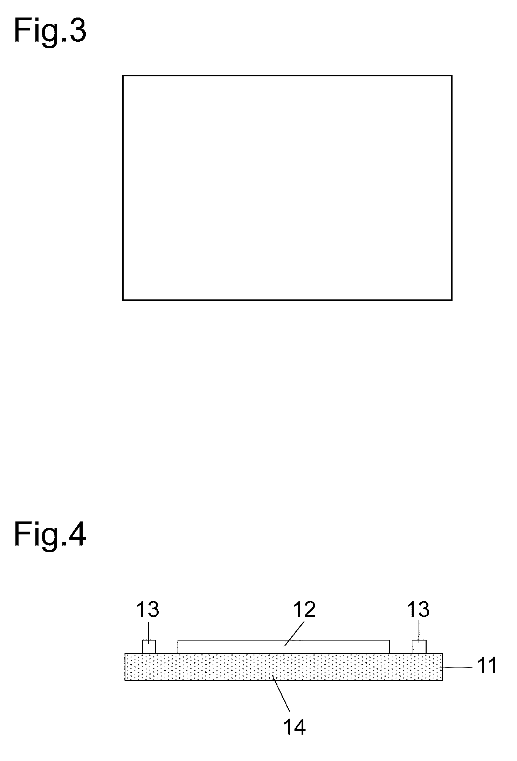

- Fig. 3: ein Dekorpapier in einer Ansicht auf die Rückseite;
- Fig. 4: ein erfindungsgemäßes Imprägnat in einer Querschnittsdarstellung;

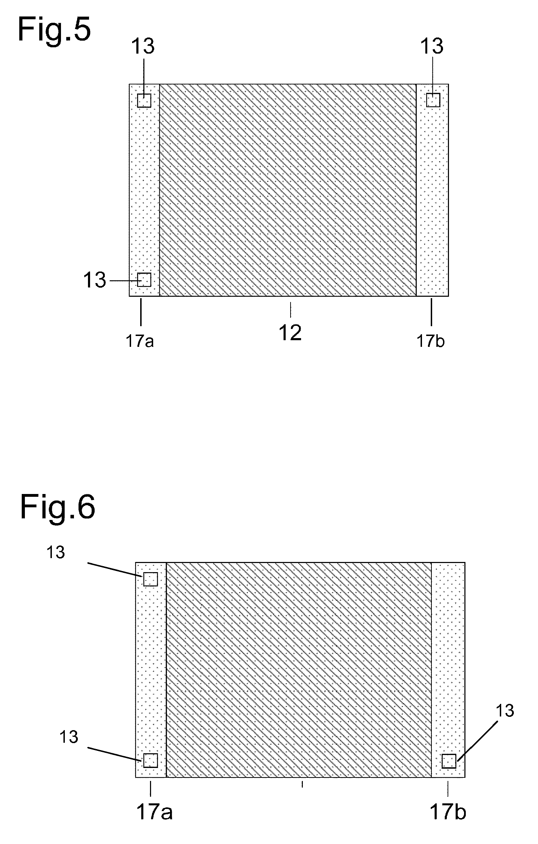

- Fig. 5: ein erfindungsgemäßes Imprägnat in einer Ansicht auf die Vorderseite;
- Fig. 6: ein erfindungsgemäßes Imprägnat in einer Ansicht auf die Rückseite;

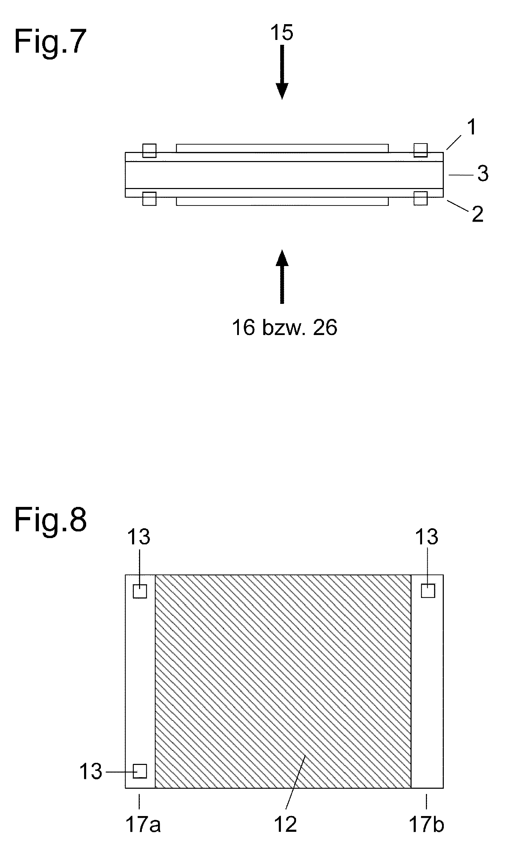

- Fig. 7: ein erfindungsgemäßes Laminat in einer Querschnittsdarstellung;
- Fig. 8: ein erfindungsgemäßes Laminat in einer Ansicht auf die Vorderseite;

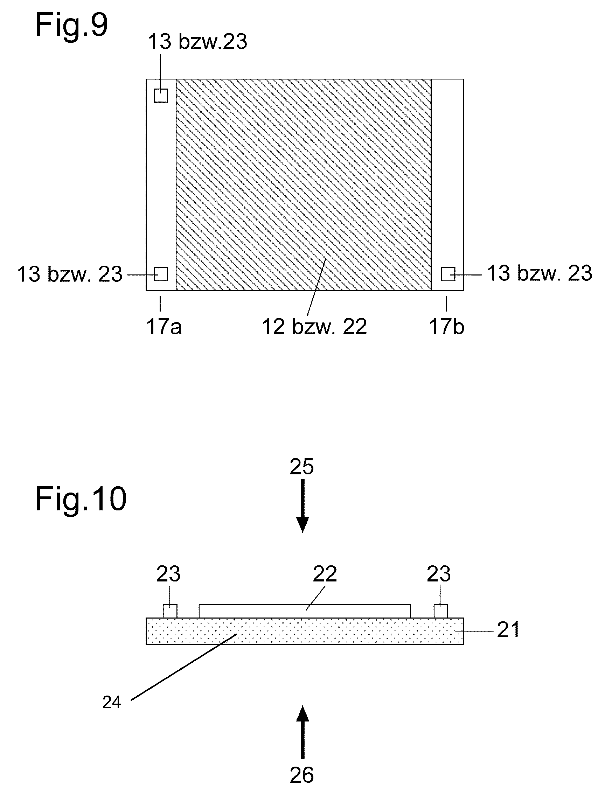

- Fig. 9: ein erfindungsgemäßes Laminat in einer Ansicht auf die Rückseite;
- Fig. 10: ein herkömmliches Imprägnat zur Verwendung als zweites Imprägnat in einer Querschnittsdarstellung;

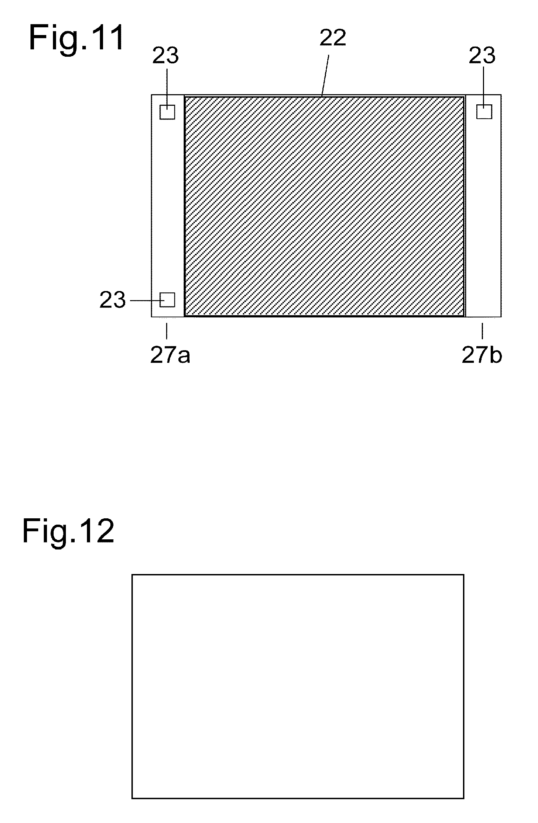

- Fig. 11: ein herkömmliches Imprägnat zur Verwendung als zweites Imprägnat in einer Ansicht auf die Vorderseite;
- Fig. 12: ein herkömmliches Imprägnat zur Verwendung als zweites Imprägnat in einer Ansicht auf die Rückseite;

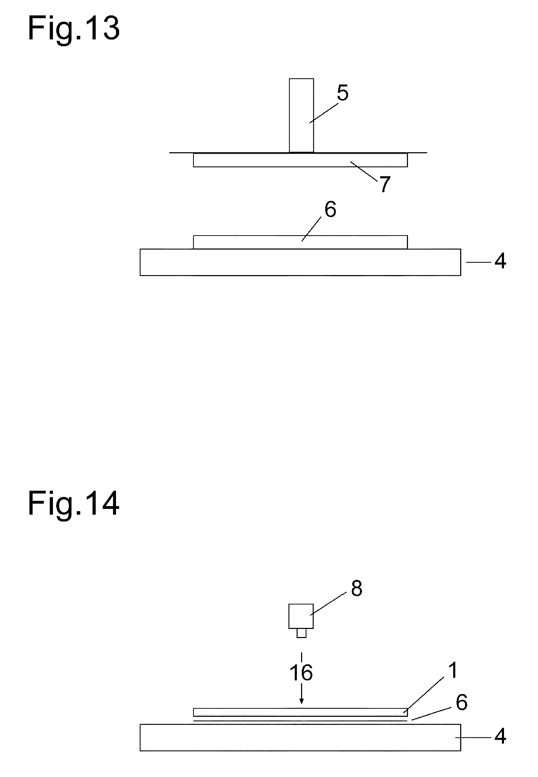

- Fig. 13: eine schematische Darstellung eines Herstellvorgangs des Laminats - schematischer Aufbau der Presse;
- Fig. 14: eine schematische Darstellung eines Herstellvorgangs des Laminats - Auflegen des ersten Imprägnats / Erfassen der Passmarken von der Rückseite des ersten Imprägnats mittels der Erfassungseinrichtung / Ausrichten;

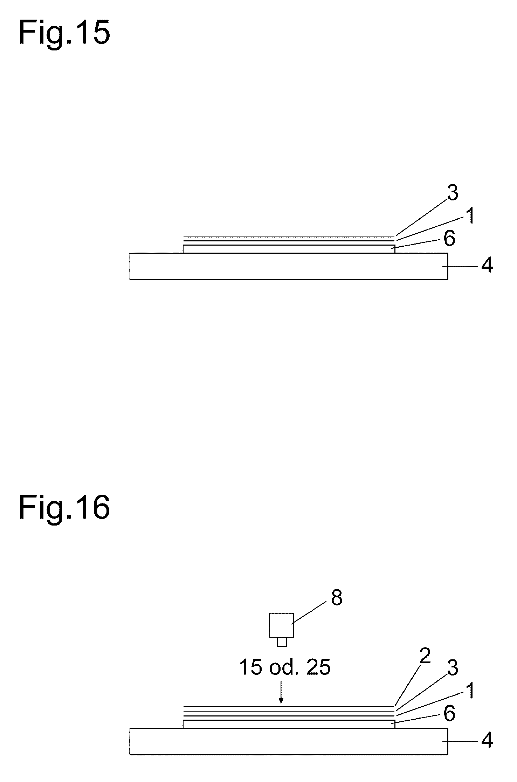

- Fig. 15: eine schematische Darstellung eines Herstellvorgangs des Laminats - Auflegen der Grundplatte;
- Fig. 16: eine schematische Darstellung eines Herstellvorgangs des Laminats - Auflagen des zweiten Imprägnats (herkömmliches oder erfindungsgemäßes Imprägnat / Erfassen der Passmarken von der Vorderseite des zweiten Imprägnats mittels der Erfassungseinrichtung / Ausrichten;

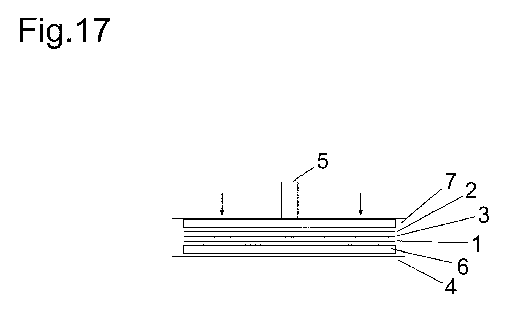

- Fig. 17: Niederfahren des Stempels / pressen des Laminats.

Folgende Bezugszeichen werden in den Abbildungen verwendet:
- 1: erstes Imprägnat
- 2: zweites Imprägnat
- 3: Grundplatte, insbesondere MDF Platte
- 4: Pressentisch
- 5: Stempel
- 6: unteres Pressblech
- 7: oberes Pressblech
- 8: Erfassungseinrichtung, insbesondere Kamera

- 11: Dekorrohpapier / Papiergerüst
- 12: Dekorschicht
- 13: Passmarke
- 14: Harz
- 15: Vorderseite
- 16: Rückseite
- 17: Randabschnitt

- 21: Dekorrohpapier
- 22: Dekorschicht
- 23: Passmarke
- 24: Harz
- 25: Vorderseite
- 26: Rückseite
- 27: Randabschnitt

Ein Dekorpapier umfasst im Wesentlichen ein Dekorrohpapier 11, eine Dekorschicht 12 und mindestens eine Passmarke 13.

Das Papiergerüst bzw. Dekorrohpapier 11 umfasst im Wesentlichen eine Mischung aus Sulfatzellstoff und Füllstoffen, das zur Weiterverarbeitung in der Holzwerkstoffindustrie optimiert ist. Es nimmt in kurzer Zeit Melaminharz oder Aminoplastharz auf und ist gekennzeichnet durch eine hohe Lichtechtheit und Nassreißfestigkeit.

Die Dekorschicht 12 umfasst im Wesentlichen per Tiefdruckverfahren aufgebrachte Farbe, die beispielsweise eine Holzoberfläche, eine Steinoberfläche oder ein ähnliches Motiv darstellt. Die Dekorschicht 12 kann auch durch andere Verfahren, wie beispielsweise Laserdruck- oder Tintenstrahlverfahren aufgebracht werden.

Bei den Passmarken 13 handelt es sich grundsätzlich um Markierungen, insbesondere aufgedruckte Markierungen, die mittels einer entsprechenden Erfassungseinrichtung 8, beispielsweise einer elektronischen Kamera, erfasst und mittels einer geeigneten Elektronik ausgewertet werden können, insbesondere was die Position bzw. Ausrichtung des mit den Passmarken 13 ausgestatteten Dekorpapiers bzw. Imprägnats betrifft. Die Passmarke 13 kann beispielsweise als Quadrat, Kreis, Dreieck, Kreuz etc. ausgestaltet sein. Grundsätzlich kommt hier jede geometrische Form in Frage, die von der Erfassungseinrichtung 8 und der entsprechend nachgeschalteten Elektronik ausgewertet werden kann.

Das Dekorpapier weist eine Vorderseite 15 und eine Rückseite 16 auf. Auf der Vorderseite 15 des Dekorpapiers ist die Dekorschicht 12 und die mindestens eine Passmarke 13 vorgesehen. Die Rückseite 16 des Dekorpapiers ist vorzugsweise unbedruckt. Im Ergebnis handelt es sich bei dem Dekorpapier um ein einseitig bedrucktes Dekorpapier, bei dem sowohl Dekorsschicht 12, als auch Passmarke bzw. Passmarken 13 auf der gleichen Seite, hier der Vorderseite 15, aufgedruckt sind.

Ein erfindungsgemäßes Imprägnat 1 umfasst im Wesentlichen das oben beschriebene Dekorpapier und ein Harz 14, wie beispielsweise Melaminharz oder Aminoplastharz. Das erfindungsgemäße ebenfalls flächige Imprägnat 1 weist eine Opazität von weniger als 50%, vorzugsweise zwischen 5% und 40%, insbesondere 15% auf. Die vergleichsweise niedrige Opazität des Imprägnats wird vorzugsweise dadurch erreicht, dass ein Dekorpapier eingesetzt wird, dass einen vergleichsweise niedrigen Anteil von Ti02 hat. Als Füllstoffe kann statt des TiO₂ beispielsweise Kaolin in das Dekorpapier eingearbeitet sein. Solch ein Dekorpapier hat als Imprägnat eine geringe Opazität. Die Opazität des Imprägnats kann durch das Verhältnis von TiO₂ zu Kaolin im Dekorpapier eingestellt werden.

Die Opazität ist das Verhältnis des Lichts, das durch ein Blatt Papier, welches auf einem schwarzen Untergrund liegt, rückgestreut wird zu dem Licht, das durch einen Stapel Papier, welcher auf einem schwarzen Untergrund liegt, rückgestreut wird. Die Opazitätsmessung wird in der DIN 53 146 beschrieben.

Das Harz 14 kann das Dekorpapier vollständig oder auch nur teilweise durchdringen. Im Ergebnis handelt es sich bei dem erfindungsgemäßen Imprägnat 1 entsprechend um ein einseitig bedrucktes Imprägnat 1, insbesondere um ein einseitig mit einer Dekorschicht 12 und mindestens einer Passmarke 13 bedrucktes Imprägnat. Auch handelt es sich bei dem Imprägnat 1 um einen flächigen Körper in Form eines Papierbogens.

In einer Draufsicht auf das erfindungsgemäße Imprägnat 1 wird eine Aufteilung in mehrere flächige Bereiche deutlich. Das Imprägnat 1 weist in einer Draufsicht auf seine Vorderseite die Dekorschicht 12 und mindestens einen Randabschnitt, vorzugsweise zwei Randabschnitte, einen ersten Randabschnitt 17a und einen zweiten Randabschnitt 17b, auf. Vorzugsweise ist der Bereich der Dekorschicht 12 in etwa rechteckförmig ausgestaltet und zwischen den zwei ebenfalls vorzugsweise rechteckförmigen Randabschnitten 17a und 17b angeordnet. Die Passmarke 3 bzw. die Passmarken 3 sind vorzugsweise in dem Randabschnitt 17a und 17b angeordnet. Vorzugsweise ist in drei Ecken des Imprägnats je eine Passmarke 13 angeordnet.

Ein erfindungsgemäßes Laminat umfasst im Wesentlichen das erfindungsgemäße Imprägnat 1, ein zweites, nicht zwangsläufig erfindungsgemäßes, Imprägnat 2 und einen plattenförmigen Grundplatte 3, beispielsweise eine MDF-Platte (mitteldichte Faserplatte), Holzplatte oder Spanplatte. Die Grundplatte 3 als solches kann ein- oder mehrschichtig ausgeführt sein.

Das zweite Imprägnat 2 kann ein erfindungsgemäßes oder herkömmliches einseitig bedrucktes Imprägnat sein. Das zweite Imprägnat 2 weist ebenfalls ein Dekorpapier mit Harz 24 auf. Das Dekorpapier für das zweite Imprägnat 2 weist ein Dekorrohpapier 21, eine Dekorschicht 22 und vorzugsweise mindestens eine Passmarke 23 auf. Das einseitig bedruckte Dekorpapier für das zweite Imprägnat 2 weist eine bedruckte Vorderseite 25 und vorzugsweise eine unbedruckte Rückseite 26 auf. Die Passmarke 23 und die Dekorschicht 22 sind ebenfalls auf der Vorderseite 25 des Dekorrohpapiers 21 aufgedruckt. In einer Draufsicht auf das zweite Imprägnat 2 sind ebenfalls zwei Randabschnitte 27a bzw. 27b und die zwischen den Randabschnitten angeordnete Dekorschicht 22 erkennbar. Es bietet sich an hier die gleiche Aufteilung wie bei dem erfindungsgemäßen Imprägnat 1 zu wählen. Im Ergebnis wird ebenfalls ein einseitig bedrucktes Imprägnat als zweites Imprägnat 2 mit einer bedruckten Vorderseite 25 und einer unbedruckten Rückseite 26 verwendet.

Es ergibt sich folgender Schichtaufbau bzw. Ausrichtung der Imprägnate 1, 2 im Hinblick auf die Grundplatte 3. Die Grundplatte 3 ist zwischen dem erfindungsgemäßen ersten Imprägnat 1 und dem zweiten Imprägnat 2 angeordnet. Die Rückseite 16 des erfindungsgemäßen Imprägnats 1 ist der plattenförmigen Grundplatte 3 zugewandt, wohingegen die Vorderseite 15 des erfindungsgemäßen Imprägnats 1 der Grundplatte 3 abgewandt ist. Die Rückseite 26 des zweiten Imprägnats 2 ist der plattenförmigen Grundplatte 3 zugewandt, wohingegen die Vorderseite 25 des zweiten Imprägnats 2 der Grundplatte 3 abgewandt ist.

Im Ergebnis handelt es sich bei dem erfindungsgemäßen Laminat um ein beidseitig dekoratives Laminat, sprich sowohl die Vorderseite, als auch die Rückseite des Laminats weisen eine bedruckte Oberfläche auf, die insbesondere von den Dekorschichten 12, 22 der Imprägnate 1, 2 gebildet wird. Es ist nicht ausgeschlossen, dass beispielsweise zusätzlich ein Overlaypapier bzw. Overlayfolie auf die Imprägnate aufgebracht ist. Es handelt sich bei dem erfindungsgemäßen Laminat jedoch nicht um ein nur einseitig dekoratives Laminat, welches nur einer Seite ein bedrucktes Dekorpapier bzw. Imprägnat und auf seiner anderen Seite ein unbedrucktes Dekorpapier bzw. Imprägnat, auch Gegenzug genannt, aufweist. Für das nur einseitig dekorative Laminat ergibt sich das der Erfindung zu Grunde liegende Problem nicht.

Erfindungsgemäß ist eine Maßnahmen vorgesehen, die eine Detektion der Passmarke 3 von der Rückseite 16 des erfindungsgemäßen Imprägnats 1 aus erlauben. Hierdurch können Vorteile bei der Herstellung des Laminats erreicht werden. Mit anderen Worten: Eine Lösung zum Ausrichten der unterseitigen Imprägnate für die Möbelherstellung liegt darin, dass Steuermarken auf der Rückseite der Imprägnate sichtbar sind.

Gemäß der Erfindung kann ein Imprägnat 1 mit einer geringeren Opazität als üblich zusammen mit einer an sich herkömmlichen Passmarke 13 eingesetzt werden. Dabei sollte die Dekorschicht 12 mit einer ausreichenden Deckkraft gedruckt werden um ein unbeabsichtigtes Durchschimmern des Grundkörpers bzw. der Grundkörperoberfläche zu vermeiden. Die nicht mit der Dekorschicht 12 bedruckten Bereiche des Dekorrohpapiers 1 1 , insbesondere der Randabschnitt 17a und 17b, lassen dann zu, dass die Passmarke 13 durchscheint und von der Rückseite 16 aus ausgelesen werden kann. Insofern weist ein erfindungsgemäßes Imprägnat insbesondere folgende Merkmale auf.

Das erfindungsgemäße Imprägnat 1 weist, zumindest in seinem Randabschnitt 17a, 17b bzw. an den Stellen an denen die Passmarken 13 aufgedruckt sind, eine Opazität von weniger als 50%, vorzugsweise zwischen 5% und 40%, insbesondere 15% auf. Vorzugsweise weist das verwendete Imprägnat 1 über seine gesamte Fläche die oben skizzierten Opazitätswerte auf. Es können aber auch nur die Bereiche in denen sich die Passmarken 13 befinden die oben genannte verminderte Opazitätswerte aufweisen, wobei die erstere Möglichkeit produktionstechnisch zu bevorzugen ist, sprich das gesamte Imprägnat weist die geringeren Opazitätswerte auf. Die Herstellung des Laminats, insbesondere das Zusammenfügen der Grundplatte und der Imprägnate, erfolgt im Wesentlichen in einer Presse, insbesondere in einer mechanischen oder hydraulischen Presse, unter Zuhilfenahme von Pressblechen 6, 7. Das Pressblech kann dabei eine strukturierte Oberfläche, beispielsweise das Relief einer nicht ebenen Holzoberfläche als Negativdarstellung, aufweisen. Eine derartige Presse umfasst im Wesentlichen einen Pressentisch 4 und einen gegenüber dem Pressentisch 4 verfahrbaren Stempel 5. In einer üblichen Betriebssituation der Presse ist der Stempel 5 oberhalb des Pressentisches 4 angeordnet. Der Pressentisch 4 ist entsprechend mit dem Pressblech 6 als unterem Pressblech und der Stempel mit dem Pressblech 7 als oberem Pressblech ausgestattet. Zwischen dem Stempel 5 und dem Pressentisch 4 bzw. zwischen dem oberen Pressblech 7 und dem unteren Pressblech 6 ergibt sich ein Bearbeitungsbereich für das herzustellende erfindungsgemäße Laminat.

Der Pressvorgang läuft prinzipiell wie folgt ab. Es wird zunächst ein erfindungsgemäßes Imprägnat 1 auf das untere Pressblech 6 aufgelegt. Die Vorderseite 15, sprich die Seite mit der Dekorschicht 12 und den Passmarken 13, ist dem unteren Pressblech 6 zugewandt. Durch die oben vorgeschlagene Maßnahme ist die Passmarke bzw. sind die Passmarken auch in dieser Lage des Imprägnats 1 von einer entsprechenden optischen Erfassungseinrichtung 8, beispielsweise einer elektronischen Kamera, detektierbar, die auf die Rückseite 16 des Imprägnats 1 gerichtet ist.

So ist beispielsweise die auf der Vorderseite 15 angeordnete Passmarke 13 bei entsprechend wenig opakem Imprägnat 1 auch auf der Rückseite 16 sichtbar und kann von der Erfassungseinrichtung 8 erfasst werden, obgleich die bedruckte Vorderseite 15 des Imprägnats der Erfassungseinrichtung 8 abgewandt ist.

Im Ergebnis kann die Passmarke 13 durch die auf die Rückseite 16 des ersten Imprägnats 1 gerichtete Erfassungseinrichtung 8 erkannt und das erfindungsgemäße Imprägnat 1 entsprechend zu dem Pressblech 6 ausgerichtet werden. Die für die Ausrichtung notwendigen Ausrichtungseinrichtungen sind dem Fachmann bekannt und brauchen an dieser Stelle nicht näher erörtert werden.

Anschließend kann der Grundplatte 3, beispielsweise eine MDF Platte, auf das ausgerichtete erfindungsgemäße Imprägnat 1 aufgelegt werden.

Auf der Grundplatte 3 wird das weitere Imprägnat 2 aufgelegt. Es kann sich hierbei um ein herkömmliches oder erfindungsgemäßes Imprägnat handeln. Da die Vorderseite 25 des zweiten Imprägnats der Erfassungseinrichtung 8 zugewandt ist, sind die auf der Vorderseite aufgedruckten Passmarken 23 unmittelbar durch die Erfassungseinrichtung 8 auswertbar. Über wiederum geeignete Ausrichtungseinrichtungen kann auch das zweite Imprägnat 2 zu dem oberen Pressblech 7 ausgerichtet werden.

Im Ergebnis sind sowohl das erste Imprägnat 1 zu dem unteren Pressblech 6 und das zweite Imprägnat 2 zu dem oberen Pressblech 7 ausgerichtet.

Das Ausrichten des ersten Imprägnats 1 zu dem unteren Pressblech 6 und des zweiten Imprägnats 2 zu dem oberen Pressblech 7 kann wahlweise auch außerhalb der Presse erfolgen und das Paket aus den beiden Imprägnaten, der Grundplatte und den beiden Pressblechen - im Falle der Ausrichtung außerhalb der Presse - als Ganzes in die Presse eingefahren werden. Auch hier wird das Problem des undurchsichtigen unteren Pressblechs 6 und der Erfassung der Passmarken des hierauf liegenden ersten Imprägnats 1 dadurch gelöst, dass die Passmarken durchschimmern und auf von der Rückseite des ersten Imprägnats 1 her erfasst werden können.

In einem Pressvorgang können die Imprägnate 1, 2 unter Einbringung von Wärme und Druck unlösbar mit dem Grundplatte 3 verbunden werden. Im Wesentlichen schmilzt dabei das Harz 14 auf, und verbindet nach dem Erkalten die Imprägnate 1, 2 mit der Grundplatte 3. Das Harz 14 vernetzt nunmehr vollständig. Anschließend können die Randabschnitte 17 bzw. 27 des so entstandenen Laminats entfernt werden, so dass beispielsweise bei einem Holzdekor als Dekorschicht, eine beidseitige Nachahmung eines Holzbrettes entstanden ist. Dieses Verfahren wird auch "Embossing in Register (EIR)" genannt.

Es ist einsichtig, dass sich das Problem bei einseitig dekorativen Laminat nicht stellt, da für dessen Herstellung ein unbedrucktes, ggf. eingefärbtes Dekorpapier bzw. Imprägnat als Unterzug verwendet werden kann, welches entsprechend auf das untere Pressblech, welche im übrigen dann auch glatt sein kann, ohne eine derart passgenaue Ausrichtung aufgelegt werden kann. Im Wesentlichen würde es hier reichen, das unbedruckte Dekorpapier bzw. Imprägnat mit entsprechenden Anschlägen in einer vorbestimmten Position aufzunehmen.

Es ist ferner zu erwähnen, dass die Abbildungen stark schematisch sind und Größenverhältnisse nicht maßstabsgetreu wiedergegeben werden.

## Patentansprüche

1. Imprägnat (1) mit einer Vorderseite (15) und einer Rückseite (16), wobei eine Dekorschicht (12) und mindestens eine Passmarke (13) auf der Vorderseite (15) angeordnet ist,
**dadurch gekennzeichnet, dass**
das Imprägnat (1) eine Opazität von weniger als 50%, vorzugsweise zwischen 5% und 40%, insbesondere 15% aufweist.

2. Imprägnat nach Anspruch 1, **dadurch gekennzeichnet**, keine Dekorschicht oder Passmarke auf der Rückseite (16) angeordnet sind, insbesondere die Rückseite unbedruckt ist.

3. Imprägnat nach mindestens einem der vorhergehenden Ansprüche, **dadurch gekennzeichnet, dass** es sich bei der Dekorschicht (12) um die Abbildung einer Holz-, Stein- oder sonstigen Oberfläche handelt, umfassend Farbe, die vorzugsweise mittels Tiefdruck-, Laserdruck- oder Tintenstrahlverfahren aufgebracht ist.

4. Imprägnat nach mindestens einem der vorhergehenden Ansprüche, **dadurch gekennzeichnet, dass** die Passmarke (13) als Kreis, Kreuz, Dreieck oder Quadrat ausgestaltet ist.

5. Imprägnat nach mindestens einem der vorhergehenden Ansprüche, **dadurch gekennzeichnet, dass** die Vorderseite (15) in einer Draufsicht einen ersten Randabschnitt (17a) und einen zweiten Randabschnitt (17b) aufweist, wobei die Dekorschicht (12) zwischen den Randabschnitten (17a, 17b) angeordnet ist, wobei die mindestens eine Passmarke (13) in dem ersten Randabschnitt (17a) oder dem zweiten Randabschnitt (17b) angeordnet ist, insbesondere mindestens je eine Passmarke in jedem Randabschnitt (17a, 17b) angeordnet ist, wobei die Randabschnitte eine Opazität von weniger als 50%, vorzugsweise zwischen 5% und 40%, insbesondere 15% aufweisen.

6. Imprägnat nach mindestens einem der vorhergehenden Ansprüche, **dadurch gekennzeichnet, dass** das Harz (14) ganz oder teilweise über den Querschnitt des Imprägnats (1) verteilt ist.

7. Imprägnat nach mindestens einem der vorhergehenden Ansprüche, **dadurch gekennzeichnet, dass** es sich bei dem Harz (14) um Melaminharz oder Aminoplastharz handelt.

8. Laminat, umfassend
- ein erstes Imprägnat (1),
- ein zweites Imprägnat (2),
- eine zwischen den Imprägnaten (1, 2) angeordnete Grundplatte (3),
**dadurch gekennzeichnet, dass**
es sich bei dem ersten Imprägnat (1) um ein Imprägnat gemäß mindestens einem der Ansprüche 1 bis 7 handelt.

9. Laminat nach mindestens einem der vorhergehenden Ansprüche, **dadurch gekennzeichnet, dass** es sich bei dem zweiten Imprägnat (2) um ein Imprägnat gemäß mindestens einem der Ansprüche 1 bis 7 handelt oder das zweite Imprägnat (2) ein Dekorpapier und Harz (24) umfasst, wobei das Dekorpapier des zweiten Imprägnats (2) eine Vorderseite (25) und eine Rückseite (26) aufweist, wobei eine Dekorschicht (22) und vorzugsweise mindestens eine Passmarke (23) auf der Vorderseite (25) aufgebracht ist und keine Dekorschicht oder Passmarke auf der Rückseite (26) angeordnet sind, insbesondere die Rückseite (26) unbedruckt ist.

10. Laminat nach mindestens einem der vorhergehenden Ansprüche, **dadurch gekennzeichnet, dass** die Vorderseite (15) des ersten Imprägnats (1) und die Vorderseite (25) des zweiten Imprägnats (2) der Grundplatte (3) abgewandt sind bzw. die Rückseite (16) des ersten Imprägnats (1) und die Rückseite (26) des zweiten Imprägnats (2) der Grundplatte (3) zugewandt sind.

11. Verfahren zur Herstellung eines Laminats gemäß mindestens einem der Ansprüche 8 bis 10 mit einer Presse, wobei
- die Presse einen Pressentisch (4) und einen gegenüber dem Pressentisch (4) verfahrbaren Stempel (5) umfasst, wobei
- der Stempel (5) in einer üblichen Gebrauchsposition oberhalb des Pressentisches (4) angeordnet ist, wobei
- der Pressentisch (4) mit einem unteren Pressblech (6) und der Stempel mit einem oberen Pressblech (7) ausgestattet ist, wobei
- die Presse eine Erfassungseinrichtung (8) für eine Passmarke (13, 23) und eine Ausrichtungseinrichtung für das erste Imprägnat (1) und das zweite Imprägnat (2) umfasst,
**gekennzeichnet durch mindestens folgende Verfahrensschritte:**
a) Auflegen eines ersten Imprägnats (1) gemäß mindestens einem der Ansprüche 1 bis 7 auf das untere Pressblech (6), wobei die mit der Dekorschicht (12) und der mindestens einen Passmarke (13) ausgestattete Vorderseite (15) des ersten Imprägnats (1) dem unteren Pressblech (6) zugewandt bzw. der Erfassungseinrichtung (8) abgewandt ist;
b) Erfassen der **durch** das erste Imprägnat (1) durchscheinenden mindestens einen Passmarke (13) **durch** die Erfassungseinrichtung (8);
c) Ausrichten des ersten Imprägnats (1) zu dem unteren Pressblech (6) mittels der Ausrichtungseinrichtung unter Verwendung der Daten der Erfassungseinrichtung (8);
d) Auflegen einer Grundplatte (3) auf das ausgerichtete erste Imprägnat (1);
e) Auflegen eines zweiten Imprägnats (2) auf die Grundplatte (3), wobei die mit der Dekorschicht (12, 22) und der mindestens einen Passmarke (13, 23) ausgestattete Vorderseite (15, 25) des zweiten Imprägnats (2) dem oberen Pressblech (7) bzw. der Erfassungseinrichtung (8) zugewandt ist;
f) Erfassen der mindestens einen Passmarke (13, 23) des zweiten Imprägnats (2) **durch** die Erfassungseinrichtung (8);
g) Ausrichten des zweiten Imprägnats (2) zu dem oberen Pressblech (7) mittels der Ausrichtungseinrichtung unter Verwendung der Daten der Erfassungseinrichtung (8);
h) Niederfahren des Stempels (5) und pressen des Laminats.

12. Verfahren nach Anspruch 1 1 , **dadurch gekennzeichnet, dass** das Auflegen der ersten Imprägnats (1), das Erfassen der Passmarke (13) des ersten Imprägnats, das Ausrichten des ersten Imprägnats (1), das Auflegen der Grundplatte (3), das Auflegen des zweiten Imprägnats, das Erfassen der Passmarke (13, 23) des zweiten Imprägnats und das Ausrichten des zweiten Imprägnats (2) wahlweise innerhalb oder außerhalb der Presse vorgenommen werden.

13. Verfahren nach mindestens einem der vorhergehenden Ansprüche, **dadurch gekennzeichnet, dass** die Randbereiche (17a, 17b) abgetrennt werden.
